# EUROPEAN PATENT APPLICATION

(11) **EP 4 350 242 A1**
(43) Date of publication of application: **10.04.2024**
(21) Application number: 21942953.7
(22) Date of filing: 25.05.2021
(51) Int. Cl.: F24F 12/00, F24F 11/41, F24F 7/08

(54) **HEAT EXCHANGING-TYPE VENTILATION DEVICE AND HEAT EXCHANGING-TYPE VENTILATION SYSTEM**

(71) Applicant: MITSUBISHI ELECTRIC CORPORATION, Chiyoda-ku Tokyo 100-8310 (JP)
(72) Inventor: YASUDA, Masami, Tokyo 100-8310 (JP); HASEGAWA, Kohei, Tokyo 100-8310 (JP); KOIZUMI, Shigenori, Tokyo 100-8310 (JP); HAYAMIZU, Yutaro, Tokyo 100-8310 (JP)
(74) Representative: Witte, Weller & Partner Patentanwälte mbB
(86) International application number: PCT/JP2021/019868
(87) International publication number: WO 2022/249299

(57) **Abstract**

The control unit causes a heater (15) to operate when a temperature of a supply air flow is equal to or lower than a first temperature threshold, the temperature of the supply air flow being measured by an outdoor air temperature sensor (9) while an air supply blower (3) and an exhaust blower (2) are in operation and the heater (15) is stopped; and controls a protective operation mode when a temperature of the supply air flow is equal to or lower than a second temperature threshold, the protective operation mode being a mode in which the air supply blower (3) is intermittently operated or is stopped and the exhaust blower (2) continues operation, the temperature of the supply air flow being measured by the outdoor air temperature sensor (9) after the heater (15) is caused to operate.

## Description

### Field

The present disclosure relates to a heat-exchange ventilation apparatus and a heat-exchange ventilation system that perform ventilation while performing heat exchange between a supply air flow and an exhaust air flow.

### Background

Patent Literature 1 discloses a heat-exchange ventilation apparatus that performs intermittent operation for a first predetermined time and thereafter, performs drying operation for a second predetermined time, based on a detected outdoor air temperature and a preset temperature. In the intermittent operation, an air supply blower repeatedly operates and stops operation. In the drying operation, the air supply blower stops operation and only an exhaust blower operates.

The heat-exchange ventilation apparatus of Patent Literature 1 performs the drying operation only for air exhaustion after performing the intermittent operation for air supply. Therefore, according to Patent Literature 1, it is possible to sufficiently dry the inside of a heat exchanger through the drying operation even when the inside of the heat exchanger is not sufficiently dried as a result of the intermittent operation, and thus the heat-exchange ventilation apparatus has an effect of reducing or preventing dew condensation and freezing of a heat exchanger or the like of a product.

### Citation List

### Patent Literature

Patent Literature 1: Japanese Patent Application Laid-open No. 2015-68544

### Summary of Invention

### Problem to be solved by the Invention

However, according to the heat-exchange ventilation apparatus of Patent Literature 1 described above, since the outdoor air temperature is low, the intermittent operation of the air supply blower or extra drying operation has to be performed. Thus, features of the heat-exchange ventilation apparatus are insufficient to ensure the amount of ventilation.

The present disclosure has been made in view of the above, and an object is to obtain a heat-exchange ventilation apparatus capable of ensuring an amount of ventilation while reducing or preventing dew condensation or ice formed on a heat exchanger even in winter or cold regions where outdoor air temperature decreases.

### Means to Solve the Problem

To solve the above problem and achieve an object, the heat-exchange ventilation apparatus according to the present disclosure includes: a casing including an exhaust air duct and a supply air duct that are separately formed, the exhaust air duct exhausting indoor air to an outside of a room, the supply air duct supplying outdoor air to an inside of the room; an exhaust blower to produce an exhaust air flow that flows through the exhaust air duct, the exhaust blower being provided in the exhaust air duct; an air supply blower to produce a supply air flow that flows through the supply air duct, the air supply blower being provided in the supply air duct; a heat exchanger to perform heat exchange between the supply air flow and the exhaust air flow; a heater to heat the outdoor air to be taken into the supply air duct; an outdoor air temperature sensor to measure a temperature of the supply air flow, the outdoor air temperature sensor being provided between the heater and the heat exchanger; and a control unit to control operation of the air supply blower, the exhaust blower, and the heater. The control unit causes the heater to operate when a temperature of the supply air flow is equal to or lower than a first temperature threshold, the temperature of the supply air flow being measured by the outdoor air temperature sensor while the air supply blower and the exhaust blower are in operation and the heater is stopped, and the control unit controls a protective operation mode when a temperature of the supply air flow is equal to or lower than a second temperature threshold, the protective operation mode being a mode in which the air supply blower is intermittently operated or is stopped and the exhaust blower continues operation, the temperature of the supply air flow being measured by the outdoor air temperature sensor after the heater is caused to operate.

### Effects of the Invention

According to the present disclosure, it is possible to obtain a heat-exchange ventilation apparatus capable of ensuring an amount of ventilation while reducing or preventing dew condensation or ice formed on a heat exchanger even in winter or cold regions where outdoor air temperature decreases.

### Brief Description of Drawings

FIG. 1 is a schematic diagram illustrating a heat-exchange ventilation system according to a first embodiment.
FIG. 2 is a schematic plan view of a heat-exchange ventilation apparatus in the heat-exchange ventilation system according to the first embodiment, which illustrates an outline of an internal configuration of the heat-exchange ventilation apparatus in a state where an air duct switching damper is closed.
FIG. 3 is a schematic plan view of the heat-exchange ventilation apparatus in the heat-exchange ventilation system according to the first embodiment, which illustrates an outline of the internal configuration of the heat-exchange ventilation apparatus in a state where the air duct switching damper is open.
FIG. 4 is a perspective view of a heat exchanger of the heat-exchange ventilation apparatus in the heat-exchange ventilation system according to the first embodiment.
FIG. 5 is a diagram illustrating a functional configuration related to operation of the heat-exchange ventilation apparatus in the heat-exchange ventilation system according to the first embodiment.
FIG. 6 is a block diagram illustrating a hardware configuration of a control unit according to the first embodiment.
FIG. 7 is a flowchart illustrating a flow of operation of the heat-exchange ventilation system according to the first embodiment.
FIG. 8 is a flowchart illustrating a flow of operation of a heat-exchange ventilation system according to a second embodiment.
FIG. 9 is a characteristic diagram showing an example of a temperature gradient threshold in the second embodiment.
FIG. 10 is a diagram illustrating a configuration of a heat-exchange ventilation system according to a third embodiment.
FIG. 11 is a flowchart illustrating a flow of operation of the heat-exchange ventilation system according to the third embodiment.

### Description of Embodiments

Hereinafter, a heat-exchange ventilation apparatus and a heat-exchange ventilation system according to each embodiment will be described in detail with reference to the drawings.

### First Embodiment.

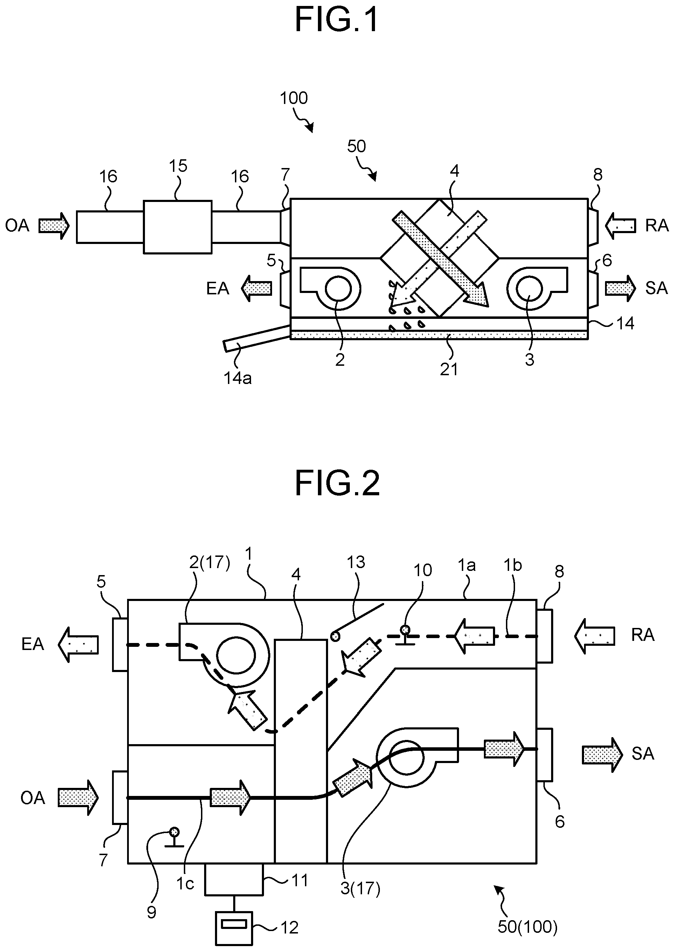

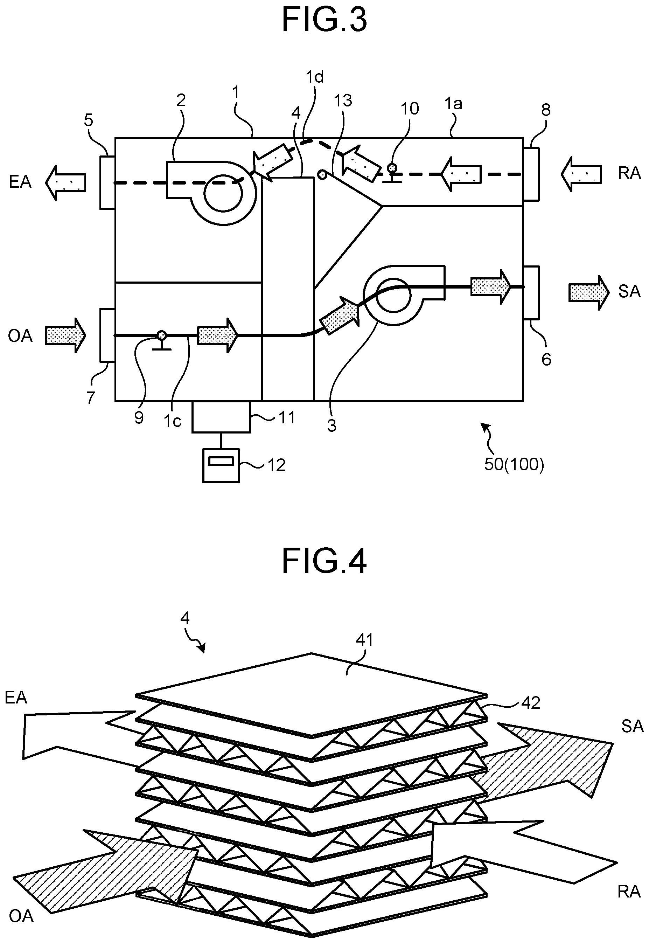

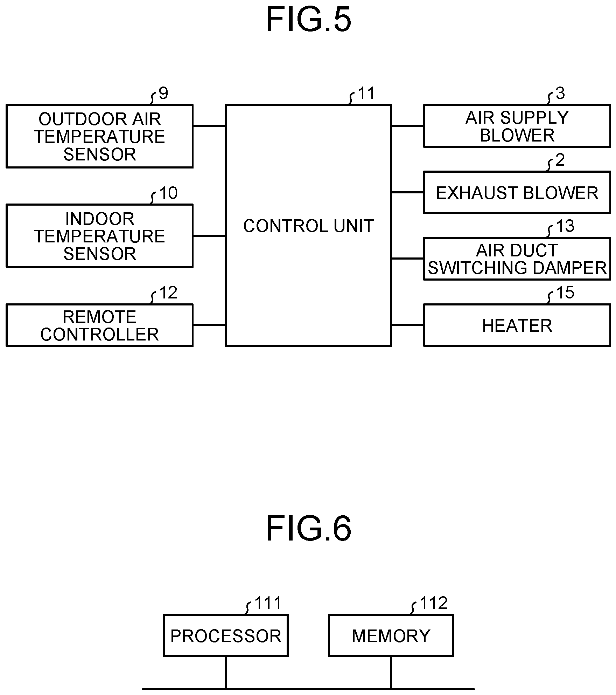

FIG. 1 is a schematic diagram illustrating a heat-exchange ventilation system 100 according to a first embodiment. FIG. 2 is a schematic plan view of a heat-exchange ventilation apparatus 50 in the heat-exchange ventilation system 100 according to the first embodiment, which illustrates an outline of an internal configuration of the heat-exchange ventilation apparatus 50 in which an air duct switching damper 13 is closed. FIG. 3 is a schematic plan view of the heat-exchange ventilation apparatus 50 in the heat-exchange ventilation system 100 according to the first embodiment, which illustrates an outline of the internal configuration of the heat-exchange ventilation apparatus 50 in which the air duct switching damper 13 is open. FIG. 4 is a perspective view of a heat exchanger 4 of the heat-exchange ventilation apparatus 50 in the heat-exchange ventilation system 100 according to the first embodiment. FIG. 5 is a diagram illustrating a functional configuration related to operation of the heat-exchange ventilation apparatus 50 in the heat-exchange ventilation system 100 according to the first embodiment. The heat-exchange ventilation system 100 includes a combination of the heat-exchange ventilation apparatus 50 and a heater 15.

The heat-exchange ventilation apparatus 50 includes a main body 1, a control unit 11, and a remote controller 12. Hereinafter, the remote controller may be referred to as a remote.

The main body 1 is a heat-exchange ventilation apparatus as a ventilation apparatus for air conditioning that includes the heat exchanger 4 inside a casing 1a serving as a box of the heat-exchange ventilation apparatus 50. The main body 1 is installed in a state of being hidden in a ceiling space. The remote controller 12 is installed in a room.

The main body 1 includes the casing 1a, an exhaust blower 2, an air supply blower 3, and the heat exchanger 4. The exhaust blower 2 forms an exhaust air flow. The air supply blower 3 forms a supply air flow. The heat exchanger 4 is a heat exchanger that performs heat exchange between the exhaust air flow and the supply air flow. The main body 1 also includes an exhaust air outlet 5, a supply air outlet 6, a supply air inlet 7, an exhaust air inlet 8, an outdoor air temperature sensor 9, and an indoor temperature sensor 10. Exhaust air EA flows out through the exhaust air outlet 5. Supply air SA flows out through the supply air outlet 6. Outdoor air OA flows in through the supply air inlet 7. Indoor air RA flows in through the exhaust air inlet 8. The outdoor air temperature sensor 9 measures the temperature of the outdoor air OA. The indoor temperature sensor 10 measures the temperature of the indoor air RA. Furthermore, the main body 1 includes the air duct switching damper 13 and a drain pan 14. The air duct switching damper 13 switches an air duct through which the exhaust air EA is passed, between an air duct for passing the exhaust air EA through the heat exchanger 4 and a bypass exhaust air duct 1d for delivering air to the exhaust blower 2 without involving the heat exchanger 4. The drain pan 14 receives dew condensation water generated in the heat exchanger 4.

The casing 1a has the exhaust air outlet 5 and the supply air inlet 7 provided on a side surface corresponding to an outdoor side, and has the supply air outlet 6 and the exhaust air inlet 8 provided on a side surface corresponding to an indoor side. Furthermore, a heat exchange exhaust air duct 1b and a supply air duct 1c are formed in the casing 1a. The heat exchange exhaust air duct 1b is an exhaust air duct that allows the exhaust air inlet 8 to communicate with the exhaust air outlet 5 to exhaust indoor air to the outside. The supply air duct 1c allows the supply air inlet 7 to communicate with the supply air outlet 6 to supply outdoor air into the room. The heat exchange exhaust air duct 1b and the supply air duct 1c are provided separately from each other throughout their entirety. In the heat-exchange ventilation apparatus 50, outdoor air serves as supply air to be supplied into the room. In addition, indoor air serves as exhaust air to be exhausted outside.

The indoor air RA flowing in from the exhaust air inlet 8 passes through the heat exchanger 4 to become the exhaust air EA, and flows out from the exhaust air outlet 5. An exhaust air flow is thus formed. The outdoor air OA, which is outdoor air flowing in from the supply air inlet 7, passes through the heat exchanger 4 to become the supply air SA, and flows out from the supply air outlet 6. A supply air flow is thus formed.

The heat-exchange ventilation apparatus 50 includes the heat exchanger 4. The heat exchanger 4 continuously performs heat exchange between an air flow passing through the supply air duct 1c and an air flow passing through the heat exchange exhaust air duct 1b. The heat exchanger 4 continuously performs heat exchange between an exhaust air flow and a supply air flow. The exhaust air flow is an air flow of the indoor air RA passing through the heat exchange exhaust air duct 1b. The supply air flow is an air flow of outdoor air passing through the supply air duct 1c. A primary air duct and a secondary air duct intersect at right angles in the heat exchanger 4. The exhaust air flow from the heat exchanger 4 passes through the primary air duct. The supply air flow passes through the secondary air duct. The heat exchanger 4 performs heat exchange between an air flow passing through the primary air duct and an air flow passing through the secondary air duct.

As illustrated in FIG. 4, the heat exchanger 4 includes partition members 41 and spacing members 42 alternately stacked. The partition members 41 and the spacing members 42 are bonded to each other with an adhesive. The primary air duct through which the exhaust air flow passes is formed on one side across the partition member 41. The primary air duct is a first gas flow path in the heat exchanger 4, and forms a part of the heat exchange exhaust air duct 1b. The secondary air duct through which the supply air flow passes is formed on another side across the partition member 41. The secondary air duct is a second gas flow path in the heat exchanger 4, and forms a part of the supply air duct 1c.

The primary air duct and the secondary air duct are separately formed inside the heat exchanger 4. Therefore, the air flow passing through the primary air duct and the air flow passing through the secondary air duct do not mix with each other. A direction in which the primary air duct extends and a direction in which the secondary air duct extends are orthogonal to each other. The heat exchanger 4 performs heat exchange between the air flow passing through the primary air duct and the air flow passing through the secondary air duct.

When the heat exchanger 4 is made of a material for total heat exchange that is exchange of temperature and humidity between the primary air duct and the secondary air duct, the heat exchanger 4 performs exchange of latent heat and sensible heat between the supply air flow and the exhaust air flow through the medium of the partition member 41.

When the heat exchanger 4 is made of a material for sensible heat exchange that does not transmit humidity but exchanges only temperature, the heat exchanger 4 performs exchange of only sensible heat between the supply air flow and the exhaust air flow through the medium of the partition member 41. For example, plastic is used as a material for sensible heat exchange. When only temperature is exchanged between the supply air flow and the exhaust air flow while the supply air flow and the exhaust air flow are passing through the heat exchanger, dew condensation water 21 is generated from the heat exchanger 4 when the temperature of the outdoor air OA subjected to heat exchange falls below a dew-point temperature. Note that, also when total heat exchange is performed, the dew condensation water 21 is generated depending on the temperature of the outdoor air OA.

Furthermore, the bypass exhaust air duct 1d is formed in the casing 1a. The bypass exhaust air duct 1d is an exhaust air duct provided together with the heat exchange exhaust air duct 1b. The bypass exhaust air duct 1d is an air duct that bypasses the heat exchanger 4 and leads from the exhaust air inlet 8 to the exhaust air outlet 5, and is an air duct for discharging the exhaust air flow to the exhaust air outlet 5 without involving the heat exchanger 4. It is possible to perform heat-exchange ventilation accompanied by heat exchange between the supply air flow and the exhaust air flow, by causing the exhaust air flow, which is the air flow of the indoor air RA sucked from the exhaust air inlet 8, to flow through the heat exchange exhaust air duct 1b and pass through the heat exchanger 4. Meanwhile, it is possible to perform normal ventilation unaccompanied by heat exchange between the supply air flow and the exhaust air flow by causing the exhaust air flow, which is the air flow of the indoor air RA sucked from the exhaust air inlet 8, to flow through the bypass exhaust air duct 1d and not to pass through the heat exchanger 4.

In the casing 1a, the air duct switching damper 13 is provided at a portion where the bypass exhaust air duct 1d branches off from the heat exchange exhaust air duct 1b. The air duct switching damper 13 is an electric air duct switching damper for switching between the heat exchange exhaust air duct 1b and the bypass exhaust air duct 1d. The air duct switching damper 13 has a rotation shaft at a point where the bypass exhaust air duct 1d branches off from the heat exchange exhaust air duct 1b. The air duct switching damper 13 forms an air duct switching part that switches between the heat exchange exhaust air duct 1b and the bypass exhaust air duct 1d by choosing whether to cause the indoor air RA sucked from the exhaust air inlet 8 to pass through the heat exchanger 4. The air duct switching damper 13 includes, for example, a plate that rotates inside the exhaust air duct, and can switch between the heat exchange exhaust air duct 1b and the bypass exhaust air duct 1d by changing the direction of the plate.

FIG. 2 illustrates a state in which the exhaust air duct has been switched to the heat exchange exhaust air duct 1b as a result of disposing the air duct switching damper 13 at a position where the bypass exhaust air duct 1d is closed, that is, at a heat-exchange ventilation position for performing heat-exchange ventilation operation. Meanwhile, FIG. 3 illustrates a state in which the exhaust air duct has been switched to the bypass exhaust air duct 1d as a result of disposing the air duct switching damper 13 at a position where the bypass exhaust air duct 1d is open, that is, a normal ventilation position for performing normal ventilation operation. As illustrated in FIG. 3, it is possible to perform bypass ventilation for exhausting the indoor air RA to the outside of the room without passing the indoor air RA through the heat exchanger 4 by opening the bypass exhaust air duct 1d by means of the air duct switching damper 13. As a result, the heat-exchange ventilation apparatus 50 can perform the normal ventilation operation which is non-heat-exchange ventilation operation unaccompanied by heat exchange between the supply air flow and the exhaust air flow.

That is, when the air duct switching damper 13 is closed, the exhaust air EA passes through the heat exchanger 4 to continuously exchange heat with the supply air SA, but when the air duct switching damper 13 is open, the exhaust air EA passes through the bypass exhaust air duct 1d, and is discharged to the outside of the room by non-heat-exchange ventilation.

Switching between the opening and closing of the air duct switching damper 13 can be manually performed with the remote controller 12. Alternatively, it is also possible to automatically open or close the air duct switching damper 13 similarly to outdoor air cooling when outdoor air temperature is lower than indoor temperature, on the basis of a temperatures detected by the outdoor air temperature sensor 9 and the indoor temperature sensor 10.

The casing 1a includes the air supply blower 3 provided in the supply air duct 1c. The air supply blower 3 generates a supply air flow from the supply air inlet 7 toward the supply air outlet 6. In addition, the casing 1a also includes the exhaust blower 2 located downstream of the heat exchanger 4, in a portion common to the heat exchange exhaust air duct 1b and the bypass exhaust air duct 1d. The exhaust blower 2 generates an exhaust air flow from the exhaust air inlet 8 toward the exhaust air outlet 5. The air supply blower 3 and the exhaust blower 2 form a blower unit 17 that generates an air flow for ventilation to let the indoor air RA out.

The air supply blower 3 includes therein an air supply motor (not illustrated) for driving the air supply blower 3. The exhaust blower 2 includes an exhaust motor (not illustrated) for driving the exhaust blower 2. The rotational speeds of the air supply motor and the air exhaust motor change under the control of the control unit 11 to be described below. The air supply blower 3 and the exhaust blower 2 can change air volume in a plurality of stages based on the settings of the remote controller 12 and the control of the control unit 11.

The casing 1a includes the outdoor air temperature sensor 9 located upstream of the heat exchanger 4, in the supply air duct 1c. The outdoor air temperature sensor 9 can measure an outdoor air temperature that is a temperature of the outdoor air OA sucked into the casing 1a from the supply air inlet 7. The outdoor air temperature sensor 9 is an outdoor temperature detection unit that measures an outdoor air temperature, which is the temperature of outdoor air, in a predetermined measurement cycle. The outdoor air temperature sensor 9 transmits information on the measured outdoor air temperature to the control unit 11 to be described below.

The casing 1a includes the indoor temperature sensor 10 located upstream of the heat exchanger 4, in the portion common to the heat exchange exhaust air duct 1b and the bypass exhaust air duct 1d. The indoor temperature sensor 10 can measure an indoor temperature that is a temperature of the indoor air RA sucked into the casing 1a from the exhaust air inlet 8. That is, the indoor temperature sensor 10 is installed in an air duct between the exhaust air inlet 8 and the heat exchanger 4, and measures the temperature of the supply air flow existing upstream of the heat exchanger 4. The indoor temperature sensor 10 measures the indoor temperature in a predetermined measurement cycle. The indoor temperature sensor 10 transmits information on the measured indoor temperature to the control unit 11 to be described below.

As illustrated in FIG. 1, the drain pan 14 is disposed in a lower portion of the casing 1a at the time of installation of the heat-exchange ventilation apparatus 50. The drain pan 14 receives dew condensation water generated in the heat exchanger 4. When outdoor air temperature decreases in winter or the like, the temperature of the indoor air RA subjected to heat exchange in the exhaust air duct of the heat exchanger 4 may fall below the dew-point temperature. When the temperature of the indoor air RA subjected to heat exchange in the exhaust air duct of the heat exchanger 4 falls below the dew-point temperature, dew condensation water is generated in the exhaust air duct of the heat exchanger 4. The generated dew condensation water is received by the drain pan 14. The dew condensation water received in the drain pan 14 is collected in a drain outlet (not illustrated) provided in the drain pan 14, and is discharged to the outside of the heat-exchange ventilation apparatus 50 through a drainpipe 14a connected to the drain outlet. Note that the drain pan 14 is not illustrated in FIGS. 2 and 3.

Furthermore, when low-temperature air is continuously sucked into the casing 1a from the supply air inlet 7, ambient temperature around dew condensation water may fall below a freezing point, resulting in ice formation in the exhaust air duct of the heat exchanger 4. When ice is formed in the exhaust air duct of the heat exchanger 4, the heat-exchange ventilation apparatus 50 suspends operation of the air supply blower 3 while causing the exhaust blower 2 to remain in operation, and performs protective operation of melting the formed ice by heat of exhaust air.

As illustrated in FIG. 2, the control unit 11 is disposed outside the casing 1a. The control unit 11 is disposed at a position where maintenance can be easily performed outside the casing 1a, and controls the air supply blower 3, the exhaust blower 2, the air duct switching damper 13, and the heater 15 to control ventilation operation of the heat-exchange ventilation apparatus 50. That is, the control unit 11 can communicate with the air supply blower 3 and the exhaust blower 2 via communication lines (not illustrated), and controls the ON and OFF of the ventilation operation and the air volumes of the air supply blower 3 and the exhaust blower 2 as basic actions of the heat-exchange ventilation apparatus 50. In addition, the control unit 11 can communicate with the air duct switching damper 13 via a communication line (not illustrated), and controls opening and closing actions with the air duct switching damper 13. Furthermore, the control unit 11 can communicate with the heater 15 via a communication line (not illustrated), and controls operation of the heater 15. The control unit 11 has a timer function.

In addition, the control unit 11 includes a storage unit (not illustrated) that stores various types of information related to control of the ventilation operation of the heat-exchange ventilation apparatus 50. A nonvolatile storage device is used as the storage unit so that stored information is not erased even when the power to the heat-exchange ventilation apparatus 50 is turned off. The storage unit is implemented by, for example, a memory.

The remote controller 12 is a terminal that allows a user to perform, at least, an operation related to the starting and stopping of operation of the heat-exchange ventilation apparatus 50. The remote controller 12 receives commands for various types of control such as a ventilation operation of the heat-exchange ventilation apparatus 50. The remote controller 12 transmits various commands received from the user to the control unit 11. That is, the remote controller 12 can switch between the ON and OFF of operation of the heat-exchange ventilation apparatus 50, switch between ventilation air volumes, switch between ventilation modes, set an operation timer, and the like. The remote controller 12 corresponds to, for example, a remote dedicated to the heat-exchange ventilation system 100, a computer in which an application for operating the heat-exchange ventilation system 100 has been installed, a tablet terminal, or a smartphone.

The heater 15 is disposed on a duct 16 that is connected to the supply air inlet 7 as an extension of the supply air path 1c of the heat-exchange ventilation apparatus 50. The heater 15 operates in conjunction with the air supply blower 3. The heater 15 heats the outdoor air OA having a temperature lower than that of the indoor air RA, and supplies the heated outdoor air OA to the supply air duct 1c of the heat-exchange ventilation apparatus 50 through the supply air inlet 7. As a result, the heater 15 contributes to reduction of ice forming in the heat exchanger 4 due to the outdoor air OA supplied to the heat exchanger 4, the outdoor air OA having a temperature lower than that of the indoor air RA.

Next, a hardware configuration of the control unit 11 according to the first embodiment will be described. The control unit 11 is implemented by processing circuitry. The processing circuitry may be a control circuit including a processor, or may be dedicated hardware. FIG. 6 is a block diagram illustrating a hardware configuration of the control unit 11 according to the first embodiment. The control circuit that implements the control unit 11 includes a processor 111 and a memory 112 as illustrated in FIG. 6. The processor 111 and the memory 112 can transmit and receive data to and from each other via, for example, a bus. The processor 111 executes the function of the control unit 11 by reading and executing a program stored in the memory 112. The processor 111 includes, for example, one or both of a central processing unit (CPU) and a digital signal processer (DSP).

The memory 112 includes one or more of a random access memory (RAM), a read only memory (ROM), a flash memory, an erasable programmable read only memory (EPROM), and an electrically erasable programmable read only memory (EEPROM (registered trademark)). In addition, a program to be stored in the memory 112 is provided through, for example, a recording medium. The recording medium includes one or more of a nonvolatile or volatile semiconductor memory, a magnetic disk, a flexible memory, an optical disk, a compact disc, and a digital versatile disc (DVD). Furthermore, the program to be stored in the memory 112 may be provided through a communication medium. When the processing circuitry is dedicated hardware, the processing circuitry includes, for example, at least one of a field programmable gate array (FPGA), an application specific integrated circuit (ASIC), and a system large-scale integration (LSI). Moreover, the memory 112 is also used as a temporary memory in each process executed by the processor 111.

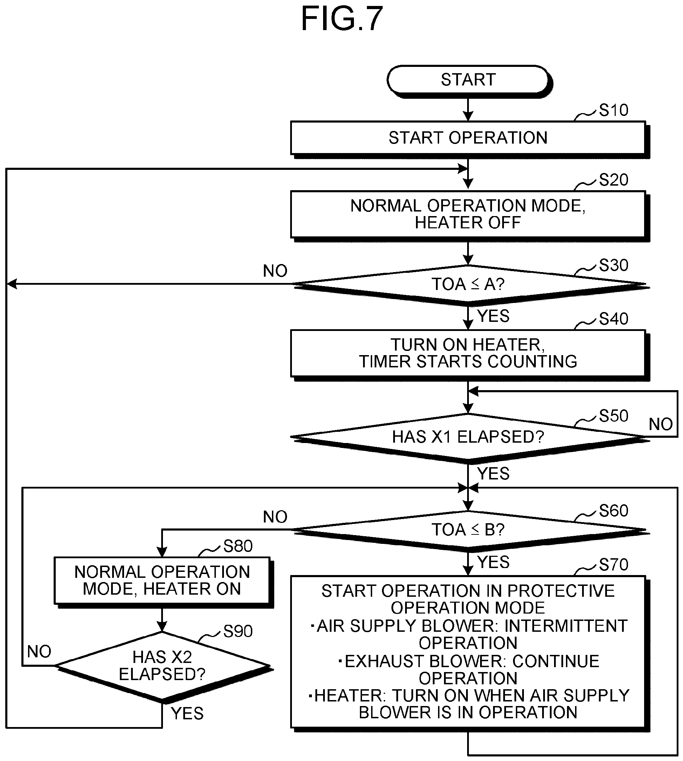

Next, operation of the heat-exchange ventilation system 100 will be described. FIG. 7 is a flowchart illustrating a flow of operation of the heat-exchange ventilation system 100 according to the first embodiment.

In step S10, the heat-exchange ventilation system 100 starts operating. Specifically, when receiving a command to start operation from the remote controller 12, the control unit 11 starts control of operation of the heat-exchange ventilation system 100. The control unit 11 receives, from the remote controller 12, an instruction for air volume and an instruction for the ventilation mode together with the command to start operation. Next, the process proceeds to step S20.

In step S20, the control unit 11 causes the air supply blower 3 and the exhaust blower 2 to operate in accordance with the instruction for air volume received from the remote controller 12, controls the opening and closing of the air duct switching damper 13 in accordance with the instruction for the ventilation mode, and controls the heat-exchange ventilation apparatus 50 in a normal operation mode. In the normal operation mode, the air supply blower 3 and the exhaust blower 2 operate with air volumes complying with the instruction for air volume. The instruction for the ventilation mode is a command to perform heat-exchange ventilation operation or a command to perform non-heat-exchange ventilation operation. In addition, the control unit 11 performs control for causing the outdoor air temperature sensor 9 and the indoor temperature sensor 10 to start measurement. The outdoor air temperature sensor 9 and the indoor temperature sensor 10 start measurement under the control of the control unit 11.

Here, the control unit 11 does not cause the heater 15 to operate, and leaves the heater 15 in an off-state, that is, a stopped state. The control unit 11 is preset such that the control unit 11 does not cause the heater 15 to operate, and leaves the heater 15 in an off-state immediately after receiving the command to start operation. Thereafter, the process proceeds to step S30.

Note that although it has been described here that the control unit 11 starts operation of the heat-exchange ventilation system 100 when receiving the command to start operation from the remote controller 12, the condition for starting operation of the heat-exchange ventilation system 100 is not limited to the command to start operation from the remote controller 12. For example, the control unit 11 may automatically start operation of the heat-exchange ventilation system 100 at time set in advance in the control unit 11 according to an instruction received from the remote controller 12.

In step S30, the control unit 11 determines whether an outdoor air temperature TOA is equal to or lower than a predetermined temperature threshold "A". The outdoor air temperature TOA is the temperature of the outdoor air OA flowing in from the supply air inlet 7. Specifically, the control unit 11 determines whether the outdoor air temperature TOA is equal to or lower than the temperature threshold "A" by receiving information on the temperature of the outdoor air OA transmitted from the outdoor air temperature sensor 9 and comparing the outdoor air temperature TOA with the temperature threshold "A".

The temperature threshold "A" is a first temperature threshold and a reference value of the outdoor air temperature TOA for the control unit 11 to determine whether to start operation of the heater 15 after starting operation of the heat-exchange ventilation system 100 without causing the heater 15 to operate. The temperature threshold "A" is determined in advance and stored in the control unit 11.

The temperature threshold "A" just needs to be set in consideration of a temperature at which dew condensation water is generated in the exhaust air duct of the heat exchanger 4 by operation of the heat-exchange ventilation apparatus 50 or a temperature at which ice is formed in the exhaust air duct of the heat exchanger 4 by the operation of the heat-exchange ventilation apparatus 50. For example, when the heat exchanger 4 performs sensible heat exchange in which only temperature is exchanged, dew condensation water is frequently generated in the exhaust air duct of the heat exchanger 4 in winter. In this case, the temperature threshold "A" just needs to be set at 0°C which is a temperature at which the dew condensation water starts to freeze.

In addition, when the heat exchanger 4 performs total heat exchange in which humidity is exchanged together with temperature, ice formation is less likely to occur in the exhaust air duct of the heat exchanger 4 even when the temperature of the outdoor air OA flowing in from the supply air inlet 7 is lower than the temperature at which the dew condensation water starts to freeze. In this case, the temperature threshold "A" may be set to a value lower than that of the case where the heat exchanger 4 performs sensible heat exchange. When the heat exchanger 4 performs total heat exchange, the temperature threshold "A" may be set to a temperature around, for example, -5°C to widen a range of the temperature of the outdoor air temperature TOA at which the heater 15 is turned off after operation of the heat-exchange ventilation system 100 is started, so as to achieve reduction of power consumption due to non-operation of the heater 15. The outdoor air temperature TOA and the temperature threshold "A" are expressed in, for example, degrees Celsius (°C).

When the control unit 11 determines that the outdoor air temperature TOA is higher than the temperature threshold "A", a determination of "No" is made in step S30, and the process returns to step S20 to continue control of the normal operation and control of the stop of the heater 15. When the control unit 11 determines that the outdoor air temperature TOA is equal to or lower than the temperature threshold "A", a determination of "Yes" is made in step S30, and the process proceeds to step S40.

In step S40, the heater 15 starts operating, and the timer starts counting. Specifically, the control unit 11 turns on the heater 15 to start operation of the heater 15, and performs operation of heating the outdoor air OA flowing in from the supply air inlet 7. In addition, the control unit 11 turns on the heater 15, and at the same time, causes counting to be started based on the timer function. Thereafter, the process proceeds to step S50. The timer function of the control unit 11 may be used as the timer. Alternatively, a timer may be provided independently of the control unit 11.

In step S50, the control unit 11 determines whether a predetermined first set time X1 has elapsed. Specifically, the control unit 11 monitors the count time of the timer, and determines whether the first set time X1 has elapsed since the timer started counting, that is, whether the first set time X1 has elapsed since the heater 15 started operating.

The first set time X1 is a reference value of an elapsed time for the control unit 11 to make a determination as to a timing for determining whether the outdoor air temperature TOA is equal to or lower than a temperature threshold "B" after the heater 15 starts operating in step S40. The first set time X1 is determined in advance and stored in the control unit 11.

When the control unit 11 determines that the first set time X1 has not elapsed, a determination of "No" is made in step S50, and step S50 is repeated. When the control unit 11 determines that the first set time X1 has elapsed, a determination of "Yes" is made in step S50, and the process proceeds to step S60.

In step S60, the control unit 11 determines whether the outdoor air temperature TOA is equal to or lower than the predetermined temperature threshold "B". Specifically, the control unit 11 determines whether the outdoor air temperature TOA is equal to or lower than the temperature threshold "B" by receiving information on the temperature of the outdoor air OA transmitted from the outdoor air temperature sensor 9 and comparing the outdoor air temperature TOA with the temperature threshold "B".

The temperature threshold "B" is a second temperature threshold, and is a reference value of the outdoor air temperature TOA for the control unit 11 to determine whether to change the operation mode of the heat-exchange ventilation apparatus 50 from the normal operation mode to a protective operation mode. The temperature threshold "B" is determined in advance and stored in the control unit 11. The temperature threshold "B" that is the second temperature threshold is equal to or less than, for example, the temperature threshold "A" that is the first temperature threshold.

When the control unit 11 determines that the outdoor air temperature TOA is equal to or lower than the temperature threshold "B", a determination of "Yes" is made in step S60, and the process proceeds to step S70. When the control unit 11 determines that the outdoor air temperature TOA is higher than the temperature threshold "B", a determination of "No" is made in step S60, and the process proceeds to step S80.

In step S70, operation is started in the protective operation mode in which protection control is performed for the purpose of preventing ice from being formed in the heat exchanger 4 or preventing cold air from entering the heat exchanger 4. Specifically, the control unit 11 switches the operation mode of the heat-exchange ventilation apparatus 50 from the normal operation mode to the protective operation mode.

The protective operation mode is an operation mode for performing protective operation of melting formed ice by heat of the exhaust air EA when dew condensation water or ice formation occurs in the exhaust air duct of the heat exchanger 4. The protective operation mode is an operation mode in which the heat-exchange ventilation apparatus 50 is controlled in protective operation. In the protective operation, the exhaust blower 2 continues the same operation as in the normal operation mode and the air supply blower 3 performs an intermittent operation in which the air supply blower 3 repeatedly starts and stops operation at predetermined time intervals. Furthermore, the heater 15 is turned on only when the air supply blower 3 is in operation. That is, the heater 15 operates only while the air supply blower 3 is operating, and is not in operation while the air supply blower 3 is stopped.

For example, in the protective operation mode, the air supply blower 3 repeats an operation cycle in which the air supply blower 3 is stopped only for 10 minutes and then operates only for 50 minutes. As a result of operating in the protective operation mode, the heat-exchange ventilation apparatus 50 can suspend supply of the outdoor air OA with a low temperature to the heat exchanger 4, and can melt ice formed in the exhaust air duct of the heat exchanger 4 with heat of the indoor air RA flowing in from the exhaust air inlet 8.

Operating time and suspension time in the intermittent operation of the air supply blower 3 may be changed depending on the outdoor air temperature TOA. For example, as the outdoor air temperature TOA is lower, a shorter operating time is set for the air supply blower 3 in the intermittent operation, and a longer suspension time is set for the air supply blower 3 in the intermittent operation. It is possible to further increase the effect of melting the ice formed in the exhaust air duct of the heat exchanger 4 with heat of the indoor air RA described above by adjusting the operating time and the suspension time of the air supply blower 3 in the intermittent operation in this manner.

In addition, the control unit 11 may set the operating time and the suspension time of the air supply blower 3 in the intermittent operation such that the operating time and the suspension time differ for each of a plurality of different temperature thresholds "B". That is, the control unit 11 may set a plurality of different values as the temperature thresholds "B", and may provide a set of step S60 and step S70 for each temperature threshold "B". For example, when the outdoor air temperature TOA is equal to or lower than a first temperature threshold "B" even if a first set of first step S60 and first step S70 is performed for the first temperature threshold "B", a second set of second step S60 and second step S70 is performed for a second temperature threshold "B". The second temperature threshold "B" is a temperature lower than the first temperature threshold "B". In second step S70, a shorter operating time than in first step S70 is set for the air supply blower 3 in the intermittent operation, and a longer suspension time than in first step S70 is set for the air supply blower 3 in the intermittent operation. It is possible to further increase the effect of melting the ice formed in the exhaust air duct of the heat exchanger 4 with heat of the indoor air RA described above by performing such operation.

In addition, another example of setting the protective operation mode is to completely stop the air supply blower 3. It is possible to further increase the effect of melting the ice formed in the exhaust air duct of the heat exchanger 4 with heat of the indoor air RA described above by completely stopping the air supply blower 3 in the protective operation mode, as compared with the case where the air supply blower 3 performs the intermittent operation.

Therefore, in the protective operation mode in the present embodiment, that is, the first embodiment, the exhaust blower 2 continues the same operation as in the normal operation mode, and the air supply blower 3 intermittently operates or stops.

The temperature threshold "B" may be set to the same value as the temperature threshold "A", or may be set to a value lower than the temperature threshold "A" so as to cause the heat-exchange ventilation apparatus 50 to operate in the protective operation mode when the outdoor air temperature TOA is low even if the heater 15 is operated. For example, when the heat exchanger 4 performs sensible heat exchange, it is possible to quickly shift to the protective operation mode even if the outdoor air temperature TOA is below the freezing point, by setting the temperature threshold "B" to 0°C as with the temperature threshold "A", and it is possible to reduce the amount of ice formed in the exhaust air duct of the heat exchanger 4 during the first set time X1 as much as possible.

In addition, when differentiating the temperature threshold "A" and the temperature threshold "B" as much as possible, it is possible to minimize a decrease in the amount of air supplied into the room by operation of the heat-exchange ventilation apparatus 50 in the protective operation mode. Such setting of the temperature threshold "A" and the temperature threshold "B" is suitable when the heat exchanger 4 performs total heat exchange having proof strength against ice forming that occurs when the outdoor air temperature TOA is low. In this case, the temperature threshold "B" is preferably set to about -10°C.

In step S80, the control unit 11 determines that the heat-exchange ventilation apparatus 50 need not operate in the protective operation mode, and operation in the normal operation mode, which is normal ventilation operation, is continued in combination with operation of the heater 15. Specifically, the control unit 11 causes the heat-exchange ventilation apparatus 50 to continue operation in the normal operation mode while causing the heater 15 to operate. Thereafter, the process proceeds to step S90.

In step S90, the control unit 11 determines whether a predetermined second set time X2 has elapsed. Specifically, the control unit 11 monitors the count time of the timer, and determines whether the second set time X2 has elapsed since the timer started counting, that is, whether the second set time X2 has elapsed since the heater 15 started operating.

The second set time X2 is a reference value of an elapsed time for the control unit 11 to determine whether to stop the heater 15 after the heater 15 starts operating in step S40. The second set time X2 is determined in advance and stored in the control unit 11.

When the control unit 11 determines that the second set time X2 has not elapsed, a determination of "No" is made in step S90, and the process returns to step S60. When the control unit 11 determines that the second set time X2 has elapsed, a determination of "Yes" is made in step S90, and the process returns to step S20.

As a result of steps S50 and S60 described above, the temperature threshold "B" is compared with the outdoor air temperature TOA obtained after the elapse of the predetermined first set time X1 from the start of operation of the heater 15. Thus, cold air which remains in the duct 16 that supplies the outdoor air OA to the heat-exchange ventilation apparatus 50 or remains in the heat-exchange ventilation apparatus 50, is detected. That is, the outdoor air temperature TOA with a low temperature is detected. It is thus possible to prevent an unintended transition to the protective operation mode due to the comparison between the detected outdoor air temperature TOA and the temperature threshold "B".

In addition, the first set time X1 is set such that the first set time X1 is equal to or longer than a time that elapses before the heater 15 enters a steady operation state after the start of operation. Since the first set time X1 is set under such conditions, no determination is made in step S60 before the heater 15 enters a steady operation state after the start of operation. As a result, the heater 15 can reliably heat the outdoor air OA. In step S60, the outdoor air temperature TOA of the outdoor air OA heated by the heater 15 operating with its original performance in a steady operation state is compared with the temperature threshold "B". This prevents frequent transition to the protective operation mode that is caused from the comparison between the outdoor air temperature TOA of the outdoor air OA insufficiently heated and the temperature threshold "B".

Furthermore, even when a transition to the protective operation mode is made in step S70, it is possible to perform control in such a way as to shorten the suspension time of the air supply blower 3 in the intermittent operation of the air supply blower 3 because the heater 15 is in the steady operation state after the elapse of the first set time X1. It is thus possible to ensure comfort in the room by ensuring the amount of ventilation for the supply air SA and letting in fresh air.

More specifically, there is a transition period in which heat generated by the heater 15 is not sufficiently transmitted to the outdoor air OA even if the heater 15 is caused to operate in step S40 because heat of the heater 15 is absorbed due to the heat capacity of the heater 15 itself and the heat capacity of the supply air duct between the heater 15 and the outdoor air temperature sensor 9. Therefore, step S50 is provided in the first embodiment considering the time of the transition period so that the progress of the processing step can be stopped during the transition period and a determination can be made in step S60 after the elapse of the transition period.

When the first set time X1 has elapses, the heater 15 has substantially reached a steady state, the heat of the heater 15 has been sufficiently transmitted to the supply air SA, and the supply air SA has reached a temperature corresponding to the amount of heat generated by the heater 15. Therefore, in the measuring at step S60 that is the subsequent step, the outdoor air temperature TOA can be measured in a stationary phase following the transition period. As a result, the temperature of the supply air SA, that is, the outdoor air temperature TOA can be accurately measured while the heater 15 is operating in the steady state after starting its operation. In other words, it is possible to measure a temperature that the supply air SA has stably reached as a result of operation of the heater 15. Therefore, in the heat-exchange ventilation system 100, it is possible to appropriately determine whether to shift to the protective operation mode in accordance with the temperature of the supply air SA to be obtained when the heater 15 is caused to operate. As a result, it is possible to prevent operation from being prematurely performed in the protective operation mode, so that it is possible to prevent the amount of ventilation from being unnecessarily reduced.

The first set time X1 in step S50 just needs to be matched with the time required for the heater 15 in use to reach steady operation. When an electric heater generally having a high rate of temperature increase is used as the heater 15, the first set time X1 may be set to a relatively short time. Thus, the first set time X1 of, for example, about 10 minutes is appropriate. In addition, a heater using a refrigerant or a hot-water coil requires time to raise temperature. Therefore, when a heater using a refrigerant or a hot-water coil is used as the heater 15, the first set time X1 just needs to be set to a relatively long time. Thus, the first set time X1 of, for example, about 30 minutes is appropriate.

Furthermore, when the heater 15 is frequently turned on and off, warm air heated by the heater 15 and cold air not heated by the heater 15 may be alternately taken as the outdoor air OA into the heat exchanger 4. As a result, the temperature of the supply air SA to be supplied into the room changes frequently. This may cause deterioration of comfort in the room. Therefore, the second set time X2 in step S90 is suitably set such that the heater 15 can continuously operate for a long time that is about one hour, for example. In order to give priority to comfort in the room due to continuous operation of the heater 15, the second set time X2 may be further longer than one hour.

Furthermore, the first set time X1 may be set based on the magnitude of the output of the heater 15 with respect to the volume of supply air in the heat-exchange ventilation apparatus 50, or may be changed depending on a change in the volume of supply air in the heat-exchange ventilation apparatus 50 set by the remote controller 12.

In addition, the heater 15 is operated while the air supply blower 3 is operating during the protective operation mode in step S70. Thus, it is possible to prevent fresh outdoor air, which is outdoor air with temperature having not been raised by the heater 15, from being supplied into the room. Accordingly, it is possible to improve comfort in the room in winter or the like and to prevent generation of dew condensation water or ice forming in the exhaust air duct of the heat exchanger 4.

Note that although the heat-exchange ventilation system 100 including a combination of the heat-exchange ventilation apparatus 50 and the heater 15 has been described above, a heat-exchange ventilation apparatus may be configured such that the heat-exchange ventilation apparatus includes the heater 15 as one of constituent elements in addition to the heat-exchange ventilation apparatus 50. In this case, the heater 15 is located upstream of the heat exchanger 4, in the supply air duct 1c inside the casing 1a, for example. The heat-exchange ventilation apparatus configured as described above can achieve the above-described effects by performing the same operation as the heat-exchange ventilation system 100.

As described above, in the heat-exchange ventilation system 100 according to the present embodiment, that is, the first embodiment, it is possible to appropriately determine and control each of the operation of the heater 15 and the operation of the air supply blower 3 in the protective operation mode in accordance with a temperature level of the outdoor air temperature TOA, which is the temperature of the outdoor air OA flowing in from the supply air inlet 7. As a result, it is possible to appropriately switch between the normal operation and the protective operation suitable for preventing generation of dew condensation water or occurrence of ice forming when the outdoor air temperature TOA is low, so that it is possible to ensure appropriate ventilation operation and an appropriate amount of ventilation according to the outdoor air temperature TOA and to provide comfort in the room.

Furthermore, in the heat-exchange ventilation system 100, the temperature threshold "B" is compared with the outdoor air temperature TOA obtained after the elapse of the first set time X1 in steps S50 and S60 to determine whether to shift to the protective operation mode. As a result, it is possible to appropriately determine whether to shift to the protective operation mode in accordance with the outdoor air temperature TOA to be obtained when the heater 15 is caused to operate. As a result, it is possible to prevent a premature shift to the protective operation mode, so that it is possible to prevent the amount of ventilation from being unnecessarily reduced.

Therefore, the present embodiment, that is, the first embodiment, achieves the effect of obtaining the heat-exchange ventilation apparatus and the heat-exchange ventilation system capable of ensuring the amount of ventilation by continuing heat-exchange ventilation as much as possible while preventing dew condensation or ice forming on the heat exchanger even in winter or cold regions where outdoor air temperature decreases.

### Second Embodiment.

Another operation of the heat-exchange ventilation system 100 according to the first embodiment described above will be described in a second embodiment. The operation of the heat-exchange ventilation system 100 in the second embodiment is basically the same as the operation of the heat-exchange ventilation system 100 in the first embodiment described above, but is different from the operation of the heat-exchange ventilation system 100 in the first embodiment described above in that another determination step is added for switching the operation mode of the heat-exchange ventilation apparatus 50 from the normal operation mode to the protective operation mode.

In the second embodiment, the control unit 11 performs control for determining whether to change the operation mode of the heat-exchange ventilation apparatus 50 from the normal operation mode to the protective operation mode on the basis of a temperature gradient TG of the outdoor air temperature TOA, that is, on the basis of a rate of change of the outdoor air temperature TOA, in addition to the control described in the first embodiment.

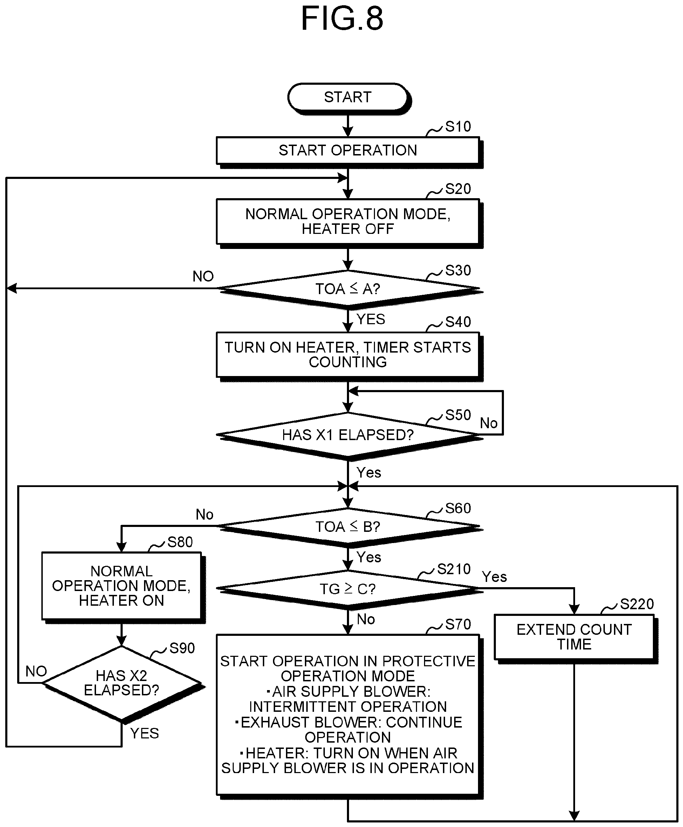

Operation of the heat-exchange ventilation system 100 according to the second embodiment will be described. FIG. 8 is a flowchart illustrating a flow of operation of the heat-exchange ventilation system 100 according to the second embodiment. Steps S210 and S220 are added to the flowchart illustrated in FIG. 7 to obtain the flowchart illustrated in FIG. 8.

As described above, the control unit 11 determines, in step S60, whether the outdoor air temperature TOA is equal to or lower than the predetermined temperature threshold "B". Specifically, the control unit 11 determines whether the outdoor air temperature TOA is equal to or lower than the temperature threshold "B" by receiving information on the temperature of the outdoor air OA transmitted from the outdoor air temperature sensor 9 and comparing the outdoor air temperature TOA with the temperature threshold "B".

When the outdoor air temperature TOA is determined to be equal to or lower than the temperature threshold "B", a determination of "Yes" is made in step S60, and the process proceeds to step S210. When it is determined that the outdoor air temperature TOA is higher than the temperature threshold B, a determination of "No" is made in step S60, and the process proceeds to step S80.

Here, in the second embodiment, the control unit 11 calculates and stores the amount of change in the temperature of the outdoor air OA during a unit time UT, that is, the temperature gradient TG of the temperature of the outdoor air OA during the unit time UT while monitoring count time with a timer in step S50. That is, the control unit 11 calculates and stores the temperature gradient TG of the temperature of the outdoor air OA within the count time of the first set time X1 in step S50.

In step S210, the control unit 11 determines whether the temperature gradient TG of the outdoor air temperature TOA obtained immediately before the end of the count time of the first set time X1 is equal to or greater than a predetermined temperature gradient threshold C. The time immediately before the end of the count time of the first set time X1 corresponds to the time immediately before the end of the first set time X1. Specifically, the control unit 11 determines whether the temperature gradient TG of the outdoor air temperature TOA obtained immediately before the end of the count time of the first set time X1 is equal to or greater than the temperature gradient threshold C by comparing, with the temperature gradient threshold C, the temperature gradient TG of the outdoor air temperature TOA obtained immediately before the end of the count time of the first set time X1 stored in step S50. The time immediately before the end of the count time of the first set time X1 corresponds to a timing a predetermined time period earlier than the end of the count time of the first set time X1.

The temperature gradient threshold C is a reference value of the temperature gradient TG of the temperature of the outdoor air OA for the control unit 11 to determine whether to change the operation mode of the heat-exchange ventilation apparatus 50 from the normal operation mode to the protective operation mode. The temperature gradient threshold C is determined in advance and stored in the control unit 11.

Note that the outdoor air temperature TOA measured within the count time of the first set time X1 may be stored in step S50, and the temperature gradient TG of the outdoor air temperature TOA obtained immediately before the end of the first set time X1 may be calculated in step S210 based on the stored outdoor air temperature TOA.

When it is determined that the temperature gradient TG of the outdoor air temperature TOA is equal to or greater than the temperature gradient threshold "C", a determination of "Yes" is made in step S210, and the process proceeds to step S220. When it is determined that the temperature gradient TG of the outdoor air temperature TOA is less than the temperature gradient threshold C, a determination of "No" is made in step S210, and the process proceeds to step S70.

In step S220, the count time of the timer is extended. Specifically, the control unit 11 causes counting to be newly started based on the timer function. Then, the control unit 11 returns to step S60 after the elapse of a predetermined extension set time X3. The control unit 11 calculates and stores the temperature gradient TG of the temperature of the outdoor air OA within the count time of the extension set time X3 in step S220. That is, the control unit 11 extends the first set time X1 in accordance with the rate of change of the outdoor air temperature TOA during the first set time X1 after the start of operation of the heater 15.

The extension set time X3 is a reference value of an elapsed time for the control unit 11 to make a determination as to a timing for making a determination in step S60 again after determining in step S60 whether the outdoor air temperature TOA is equal to or lower than the predetermined temperature threshold "B". The extension set time X3 is determined in advance and stored in the control unit 11.

When the temperature gradient TG of the outdoor air temperature TOA obtained immediately before the end of the first set time X1 is equal to or greater than the temperature gradient threshold "C", it is considered that the heater 15 has sufficient ability to further raise the temperature of the outdoor air OA. In this case, the outdoor air temperature TOA may rise to a temperature higher than the temperature threshold "B", which is a temperature at which the heat-exchange ventilation apparatus 50 need not operate in the protective operation mode.

Therefore, count time from a time point at which the operation of the heater 15 is started in step S40 is extended in step S220, and a change in the outdoor air temperature TOA is monitored until the extension set time X3 elapses. After the elapse of the extension set time X3, step S60 is performed again. When step S60 is performed again and the outdoor air temperature TOA is higher than the temperature threshold "B" in step S60, a determination of "No" is made in step S60, and the process proceeds to step S80. As a result, the heat-exchange ventilation apparatus 50 can ensure a long ventilation operation time by continuing the normal operation in which both the exhaust blower 2 and the air supply blower 3 operate according to the instruction for air volume.

When the outdoor air temperature TOA becomes equal to or lower than the temperature threshold "B" again in the determination in step S60, if the temperature gradient TG of the outdoor air temperature TOA determined in step S210 is equal to or greater than the temperature gradient threshold "C", step S210 is performed again to wait for the outdoor air temperature TOA to rise. Meanwhile, when the capacity of the heater 15 approaches the steady state and the temperature gradient TG of the outdoor air temperature TOA becomes smaller than in the initial stage of the monitoring of the temperature gradient TG of the outdoor air temperature TOA, the control unit 11 determines that it is difficult to further raise the outdoor air temperature TOA by heating the outdoor air OA by means of the heater 15. As a result, the operation mode of the heat-exchange ventilation apparatus 50 is shifted from the normal operation mode to the protective operation mode.

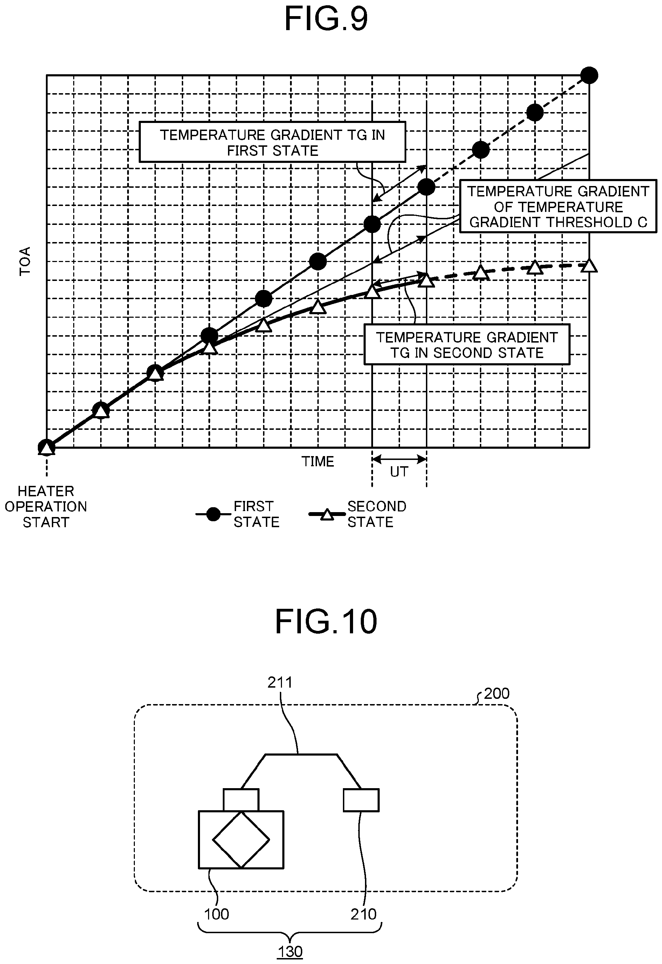

FIG. 9 is a characteristic diagram showing an example of the temperature gradient threshold C in the second embodiment. FIG. 9 illustrates the temperature gradients TG of the outdoor air temperature TOA obtained immediately before the end of the first set time X1, and the temperature gradient threshold "C" to be compared with the temperature gradient TG. FIG. 9 illustrates, as a state change of the temperature gradient TG of the outdoor air temperature TOA, a characteristic curve indicating a state change of the temperature gradient TG of the outdoor air temperature TOA in a first state and a characteristic curve indicating a state change of the temperature gradient TG of the outdoor air temperature TOA in a second state.

The temperature gradient threshold "C" just needs to be compared with the temperature gradient TG of the outdoor air temperature TOA calculated from a value of the outdoor air temperature TOA actually measured at the beginning or intermediate time of the first set time X1 counted in step S50. Furthermore, the temperature gradient threshold "C" may be compared with the temperature gradient TG of the outdoor air temperature TOA obtained at a predetermined timing in the first set time X1.

The temperature gradient TG in the first state is equal to or greater than the temperature gradient threshold "C". In this case, it is expected that the outdoor air temperature TOA can be raised by the heater 15 heating the outdoor air OA even after the first set time X1 elapses in step S50. Meanwhile, the temperature gradient TG in the second state is less than the temperature gradient threshold "C". In this case, after the elapse of the first set time X1 in step S50, the outdoor air temperature TOA cannot be expected to be further raised by the heater 15 heating the outdoor air OA.

Note that step S220 may be repeated in accordance with the state of the temperature gradient TG of the outdoor air temperature TOA determined in step S210. Furthermore, when step S220 is repeated in accordance with the state of the temperature gradient TG of the outdoor air temperature TOA, if the outdoor air temperature TOA is equal to or lower than the temperature threshold "B" even after step S220 is repeated a predetermined number of times, the operation mode of the heat-exchange ventilation apparatus 50 may be shifted from the normal operation mode to the protective operation mode.

Since the operation of the heat-exchange ventilation system 100 in the second embodiment is similar to the operation of the heat-exchange ventilation system 100 in the first embodiment except for steps S210 and S220, description thereof will be omitted.

As described above, the heat-exchange ventilation system 100 in the second embodiment has the same effects as those in the first embodiment described above.

Furthermore, according to the second embodiment, the temperature gradient TG of the outdoor air temperature TOA is monitored from the start of operation of the heater 15 until the first set time X1 elapses in step S50, and the determination in step S60 is repeated again in accordance with the temperature gradient TG of the outdoor air temperature TOA. As a result, it is possible to prevent the heat-exchange ventilation apparatus 50 from shifting to the protective operation mode by causing the outdoor air temperature TOA to be raised by the heater 15 in the steady state, so that it is possible to ensure the amount of ventilation by the normal operation.

### Third Embodiment.

A configuration where the heat-exchange ventilation system 100 according to the first embodiment described above operates in cooperation with a carbon dioxide (CO₂) sensor will be described in a third embodiment. FIG. 10 is a diagram illustrating a configuration of a heat-exchange ventilation system 130 according to the third embodiment. The heat-exchange ventilation system 130 includes a combination of the heat-exchange ventilation system 100 and a carbon dioxide (CO₂) sensor 210 described above.

The heat-exchange ventilation apparatus 50 of the heat-exchange ventilation system 100 and the CO₂ sensor 210 are installed in an identical ventilation space 200 and connected by a communication line 211. That is, the control unit 11 of the heat-exchange ventilation apparatus 50 and the CO₂ sensor 210 are connected by the communication line 211.

The CO₂ sensor 210 detects a CO₂ concentration in a room which is the ventilation space 200 in a predetermined cycle. The CO₂ sensor 210 transmits information on a result of detection of the CO₂ concentration in the room to the control unit 11 via the communication line 211. The control unit 11 controls the ventilation air volume of the heat-exchange ventilation apparatus 50, that is, the air volumes of the air supply blower 3 and the exhaust blower 2 based on the result of detection of the CO₂ concentration in the room. The control unit 11 sets the ventilation air volume of the heat-exchange ventilation apparatus 50 to a relatively large value when the CO₂ concentration in the room is high, and performs control such that the ventilation air volume of the heat-exchange ventilation apparatus 50 is relatively small when the CO₂ concentration in the room is low.

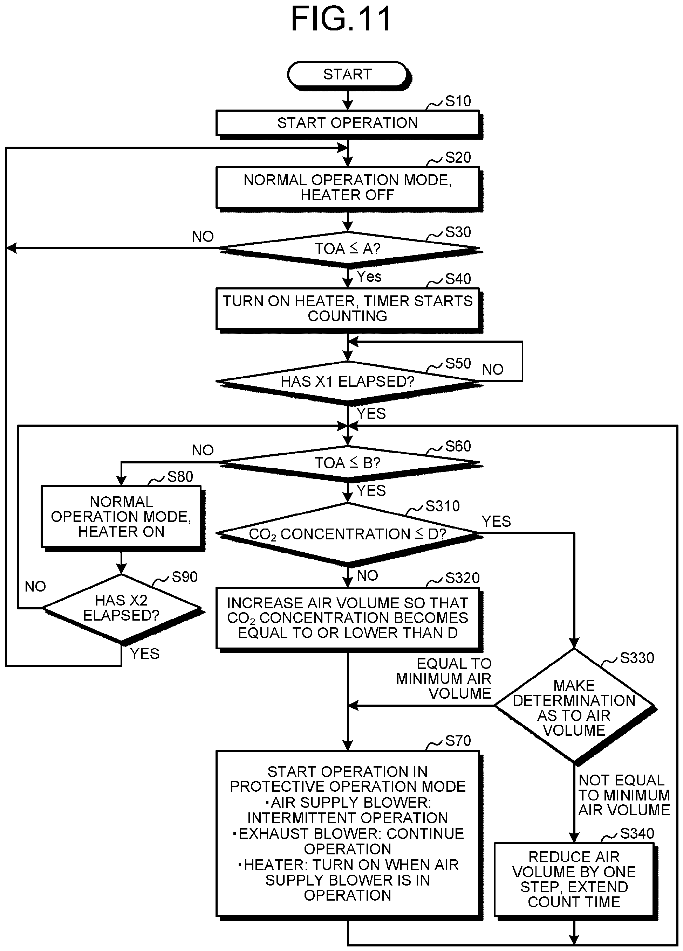

FIG. 11 is a flowchart illustrating a flow of operation of the heat-exchange ventilation system 130 according to the third embodiment. Steps S310 to S340 have been added to the flowchart illustrated in FIG. 7 to obtain the flowchart illustrated in FIG. 11.

As described above, the control unit 11 determines, in step S60, whether the outdoor air temperature TOA is equal to or lower than the predetermined temperature threshold "B". Specifically, the control unit 11 determines whether the outdoor air temperature TOA is equal to or lower than the temperature threshold "B" by receiving information on the temperature of the outdoor air OA transmitted from the outdoor air temperature sensor 9 and comparing the outdoor air temperature TOA with the temperature threshold "B".

When the control unit 11 determines that the outdoor air temperature TOA is equal to or lower than the temperature threshold "B", a determination of "Yes" is made in step S60, and the process proceeds to step S310. When the control unit 11 determines that the outdoor air temperature TOA is higher than the temperature threshold "B", a determination of "No" is made in step S60, and the process proceeds to step S80.

In step S310, it is determined whether the CO₂ concentration in the room is equal to or lower than a predetermined concentration threshold D. Specifically, the control unit 11 determines whether the CO₂ concentration in the room is equal to or lower than the concentration threshold "D" by comparing the CO₂ concentration in the room with the concentration threshold "D" on the basis of the information on the result of detection of the CO₂ concentration in the room received from the CO₂ sensor 210. When the CO₂ concentration in the room is equal to or lower than the concentration threshold D, the control unit 11 determines that the CO₂ concentration in the room may be further increased.

The concentration threshold "D" is a reference value of a CO₂ concentration in the room for the control unit 11 to determine a change in the air volume of the air supply blower 3. The concentration threshold "D" is determined in advance and stored in the control unit 11. The concentration threshold "D" just needs to be set as a CO₂ concentration in the general indoor environment within a range of 1000 ppm or more and 2000 ppm or less.

When the control unit 11 determines that the CO₂ concentration in the room is higher than the concentration threshold "D", a determination of "No" is made in step S310, and the process proceeds to step S320. When the control unit 11 determines that the CO₂ concentration in the room is equal to or lower than the concentration threshold "D", a determination of "Yes" is made in step S310, and the process proceeds to step S330.

In step S320, the air volume of the air supply blower 3 is increased so that the CO₂ concentration in the room becomes equal to or lower than the concentration threshold "D". Thereafter, the process proceeds to step S70.

In step S330, the control unit 11 makes a determination as to a current air volume of the air supply blower 3. When the control unit 11 determines that the current air volume of the air supply blower 3 is equal to a minimum air volume, the process proceeds to step S70. When the control unit 11 determines that the current air volume of the air supply blower 3 is not equal to the minimum air volume, the process proceeds to step S340.

In step S340, the air volume of the air supply blower 3 is reduced by one step without a change of the setting for the output of the heater 15, and then, the count time of a timer is extended. Specifically, the control unit 11 performs control for reducing the air volume of the air supply blower 3 by reducing the air volume of the air supply blower 3 by one step. Furthermore, the control unit 11 causes counting to be newly started based on the timer function. Then, the control unit 11 returns to step S60 after the elapse of a predetermined extension set time X4.

The extension set time X4 is a reference value of an elapsed time for the control unit 11 to determine a timing for making a determination in step S60 again after the determination of step S60 whether the outdoor air temperature TOA is equal to or lower than the predetermined temperature threshold "B". The extension set time X4 is determined in advance and stored in the control unit 11.

As a result of reduction of the air volume of the air supply blower 3 without a change of the setting for the output of the heater 15, the thermal capability of the heater 15 per unit air volume of the air supply blower 3 is increased, so that the temperature of air blown by the heater 15 can be increased. In addition, there is a possibility that the outdoor air temperature TOA rises to a temperature higher than the temperature threshold "B" which is a temperature at which the heat-exchange ventilation apparatus 50 need not operate in the protective operation mode, within an extension time set as the extension set time X4.

When step S60 is performed again and the outdoor air temperature TOA is higher than the temperature threshold "B" in step S60, a determination of "No" is made in step S60. Then, the process proceeds to step S80 without changing the air volume of the air supply blower 3 that has been reduced on a step basis according to the determination regarding the CO₂ concentration. As a result, the heat-exchange ventilation apparatus 50 can ensure a long ventilation operation time by continuing the normal operation in which both the exhaust blower 2 and the air supply blower 3 operate according to the instruction on air volume.

As described above, when the outdoor air temperature TOA is continuously equal to or lower than the temperature threshold "B" even if the air volume of the air supply blower 3 is reduced to the minimum air volume in steps S330 and S340, the heat-exchange ventilation apparatus 50 is caused to operate in the protective operation mode in step S70 with the air volume of the air supply blower 3 kept at the minimum air volume as long as the CO₂ concentration in the room continues to be equal to or lower than the concentration threshold "D". In this case, since the thermal capability of the heater 15 per unit air volume in the air volume of the air supply blower 3 is kept at a high level, the outdoor air temperature TOA can be kept at as high a level as possible even if the outdoor air temperature TOA is equal to or lower than the temperature threshold "B", so that the suspension time of the air supply blower 3 in the protective operation mode can be reduced as much as possible.

Furthermore, when the CO₂ concentration in the room is higher than the concentration threshold "D" in step S310 due to a decrease in the air volume of the air supply blower 3 as a result of the determination as to air volume made in step S330 or due to the fact that the air volume of the air supply blower 3 is set to a relatively low step by means of the remote controller 12, priority is given to the state of the CO₂ concentration in the room, and the air volume of the air supply blower 3 is increased in step S320 so that the CO₂ concentration in the room becomes equal to or lower than the concentration threshold "D". Then, the heat-exchange ventilation apparatus 50 is caused to operate in the protective operation mode in step S70 while the comfort in the room is maintained in terms of the CO₂ concentration in the room.

In steps S330 and S340, the air volume of only the air supply blower 3 connected to the heater 15 just needs to be adjusted, and the exhaust blower 2 need not be changed so as to maintain the amount of ventilation. Furthermore, in order to maintain the balance between supply air and exhaust air in the room, which is the ventilation space 200, the air volume of the exhaust blower 2 may be changed simultaneously with the air volume of the air supply blower 3.

Since the operation of the heat-exchange ventilation system 130 in the third embodiment is similar to the operation of the heat-exchange ventilation system 100 in the first embodiment except for steps S310 to S340, description thereof will be omitted.

A method has been described above in which the CO₂ sensor 210 is used as an example of a measuring device that measures the indoor environment that is the ventilation space 200, and the air volume of the air supply blower 3 is controlled based on the CO₂ concentration in the room. However, the measuring device that measures the indoor environment is not limited as long as the measuring device can measure the quality of indoor air and adjust the air volume of the air supply blower 3 of the heat-exchange ventilation apparatus 50 based on a measurement result.

As described above, the heat-exchange ventilation system 130 according to the third embodiment has the same effects as those in the first embodiment described above.

According to the heat-exchange ventilation system 130 of the third embodiment, it is possible to achieve both the operation of the air supply blower 3 with an appropriate air volume based on the CO₂ concentration in the room and the ensuring of the ventilation operation time of the normal operation based on the operation of the heater 15. Thus, it is possible to perform comfortable ventilation operation with further reduced power consumption of the blower as compared with the first embodiment.

The techniques according to the first to third embodiments described above are useful in ensuring the time of ventilation operation of the heat-exchange ventilation apparatus in winter or the like when outdoor air temperature decreases, and are suitable for a ventilation apparatus, an air conditioner, and the like that can control a blower by using information on the outdoor air temperature.

The configurations set forth in the above embodiments show examples, and it is possible to combine the configurations with another known technique or combine the embodiments with each other, and is also possible to partially omit or change the configurations without departing from the scope of the present disclosure.

### Reference Signs List

1 main body; 1a casing; 1b heat exchange exhaust air duct; 1c supply air duct; 1d bypass exhaust air duct; 2 exhaust blower; 3 air supply blower; 4 heat exchanger; 5 exhaust air outlet; 6 supply air outlet; 7 supply air inlet; 8 exhaust air inlet; 9 outdoor air temperature sensor; 10 indoor temperature sensor; 11 control unit; 12 remote controller; 13 air duct switching damper; 14 drain pan; 14a drainpipe; 15 heater; 16 duct; 17 blower unit; 21 dew condensation water; 41 partition member; 42 spacing member; 50 heat-exchange ventilation apparatus; 100, 130 heat-exchange ventilation system; 111 processor; 112 memory; 200 ventilation space; 210 carbon dioxide sensor; 211 communication line; A temperature threshold; B temperature threshold; C temperature gradient threshold; D concentration threshold; EA exhaust air; OA outdoor air; RA indoor air; SA supply air.

## Claims

1. A heat-exchange ventilation apparatus comprising:
a casing including an exhaust air duct and a supply air duct that are separately formed, the exhaust air duct exhausting indoor air to an outside of a room, the supply air duct supplying outdoor air to an inside of the room;
an exhaust blower to produce an exhaust air flow that flows through the exhaust air duct, the exhaust blower being provided in the exhaust air duct;
an air supply blower to produce a supply air flow that flows through the supply air duct, the air supply blower being provided in the supply air duct;
a heat exchanger to perform heat exchange between the supply air flow and the exhaust air flow;
a heater to heat the outdoor air to be taken into the supply air duct;
an outdoor air temperature sensor to measure a temperature of the supply air flow, the outdoor air temperature sensor being provided between the heater and the heat exchanger; and
a control unit to control operation of the air supply blower, the exhaust blower, and the heater, wherein
the control unit causes the heater to operate when a temperature of the supply air flow is equal to or lower than a first temperature threshold, the temperature of the supply air flow being measured by the outdoor air temperature sensor while the air supply blower and the exhaust blower are in operation and the heater is stopped, and
the control unit controls a protective operation mode when a temperature of the supply air flow is equal to or lower than a second temperature threshold, the protective operation mode being a mode in which the air supply blower is intermittently operated or is stopped and the exhaust blower continues operation, the temperature of the supply air flow being measured by the outdoor air temperature sensor after the heater is caused to operate.

2. The heat-exchange ventilation apparatus according to claim 1, wherein
the control unit controls the protective operation mode when a temperature of the supply air flow is equal to or lower than the second temperature threshold, the temperature of the supply air flow being measured by the outdoor air temperature sensor after a lapse of a first set time from a time when the heater is caused to operate.

3. The heat-exchange ventilation apparatus according to claim 2, wherein
the second temperature threshold is equal to or less than the first temperature threshold.

4. The heat-exchange ventilation apparatus according to claim 2 or 3, wherein
the control unit extends the first set time according to a rate of change of temperature of the supply air flow measured by the outdoor air temperature sensor during the first set time after the heater is caused to operate.

5. The heat-exchange ventilation apparatus according to any one of claims 1 to 4, wherein
as the temperature of the supply air flow measured by the outdoor air temperature sensor is lower, the control unit shortens an operating time of the air supply blower in the intermittent operation and lengthens a suspension time of the air supply blower in the intermittent operation, in the protective operation mode.

6. The heat-exchange ventilation apparatus according to claim 5, wherein
the control unit sets the operating time of the air supply blower in the intermittent operation and the suspension time of the air supply blower in the intermittent operation such that the operating time and the suspension time differ for each of a plurality of the second temperature thresholds that are different from each other.

7. The heat-exchange ventilation apparatus according to any one of claims 1 to 6, wherein
when the temperature of the supply air flow measured by the outdoor air temperature sensor is higher than the second temperature threshold, the control unit repeats comparison between the temperature of the supply air flow measured by the outdoor air temperature sensor and the second temperature threshold until a second set time elapses, and causes the heater to stop operation after a lapse of the second set time.

8. A heat-exchange ventilation system comprising:
a heat-exchange ventilation apparatus including:
a casing including an exhaust air duct and a supply air duct that are separately formed, the exhaust air duct exhausting indoor air to an outside of a room, the supply air duct supplying outdoor air to an inside of the room;
an exhaust blower to produce an exhaust air flow that flows through the exhaust air duct, the exhaust blower being provided in the exhaust air duct;
an air supply blower to produce a supply air flow that flows through the supply air duct, the air supply blower being provided in the supply air duct;
a heat exchanger to perform heat exchange between the supply air flow and the exhaust air flow; and
an outdoor air temperature sensor to measure a temperature of the supply air flow existing upstream of the heat exchanger;
a heater to heat the outdoor air to be taken into the supply air duct, the heater being disposed outside the heat-exchange ventilation apparatus; and
a control unit to control operation of the air supply blower, the exhaust blower, and the heater, wherein
the control unit causes the heater to operate when a temperature of the supply air flow is equal to or lower than a first temperature threshold, the temperature of the supply air flow being measured by the outdoor air temperature sensor while the air supply blower and the exhaust blower are in operation and the heater is stopped, and
the control unit controls a protective operation mode when a temperature of the supply air flow is equal to or lower than a second temperature threshold, the protective operation mode being a mode in which the air supply blower is intermittently operated or is stopped and the exhaust blower continues operation, the temperature of the supply air flow being measured by the outdoor air temperature sensor after the heater is caused to operate.
